# EUROPEAN PATENT APPLICATION

(11) **EP 2 631 665 A2**
(43) Date of publication of application: **28.08.2013**
(21) Application number: 13000450.0
(22) Date of filing: 30.01.2013
(51) Int. Cl.: G01S 1/68, G01S 5/02

(54) **Low power location beacon**

(30) Priority: 24.02.2012 US 201261602999 P; 19.09.2012 US 201213622835
(71) Applicant: Broadcom Corporation, Irvine, CA 92617 (US)
(72) Inventor: McGregor, Scott, Irvine, CA 92617 (US); Lundgren, David, Mill Valley, CA 94941 (US)
(74) Representative: Jehle, Volker Armin

(57) **Abstract**

Embodiments provide an "always-on," accurate, low power, and low cost solution for indoor positioning. The indoor positioning solution is enabled by one or more low power, low cost location beacons, which can be easily configured and installed in any indoor environment to support position determination. In an embodiment, the location beacons use a low power, low data rate wireless radio technology (e.g., Bluetooth Low Energy (BLE)), well suited for typical indoor ranges and data rates needed to support positioning. The location beacons may be rechargeable via ambient light and require no external power source. In addition, the location beacons benefit from a very cost efficient design, which allows for ubiquitous utilization of the enabled indoor positioning solution in a variety of indoor locations, public or private, small or large.

## Description

### CROSS-REFERENCE TO RELATED APPLICATIONS

The present application claims the benefit of U.S. Provisional Patent Application No. 61/602,999, filed on February 24, 2012, which is incorporated herein by reference in its entirety.

### Field of the Invention

The present disclosure relates generally to positioning systems.

### BACKGROUND

### Background Art

Position determination has been performed using both signaling-based and sensor-based systems. Some existing signaling-based position determination solutions employ communication technologies designed for outdoor applications. As such, these position determination solutions can have high power requirements, particularly on a mobile device, such as a cellular handset. In these known systems, positioning accuracy also may be reduced during indoor use, when unobstructed access to multiple signal sources is not possible. For example, Global Navigation Satellite System (GNSS) and cellular-based solutions can experience reduced indoor accuracy due to signal attenuation and multipath effects. Sensor-based solutions have been developed that utilize sensor output, e.g., from a compass and/or gyroscope, to determine position information. Existing sensor-based solutions rely on periodic position updates from another technology, e.g., a signal-based technology, to maintain accuracy indoors.

### BRIEF SUMMARY OF THE INVENTION

According to an aspect of the invention, a location beacon is provided, comprising:
a memory configured to store position information corresponding to a location of the location beacon;
a controller, coupled to the memory;
a wireless radio technology chip, coupled to the controller, configured to broadcast a position signal representing the position information of the location beacon;
a rechargeable power source; and
one or more solar cells configured to re-charge the rechargeable power source.

Advantageously, the controller is configured to receive the position information from the wireless radio technology chip and to store the position information in the memory.

Advantageously, the position information comprises position coordinates of the location of the location beacon.

Advantageously, the location beacon further comprises:
a power management unit (PMU) configured to control power functions in the location beacon.

Advantageously, the wireless radio technology chip is configured to broadcast the position signal according to an effective broadcast range, the effective broadcast range selected based on at least one of a history of learned mobile device positions and previously used broadcast ranges.

Advantageously, the wireless radio technology chip is configured to broadcast the position signal at a periodical rate.

Advantageously, the periodical rate is based on a charge level of a power source of the location beacon.

Advantageously, the wireless radio technology chip is configured to broadcast the position signal in response to the presence of a mobile device within a predetermined vicinity of the location beacon.

Advantageously, the wireless radio technology chip is configured to broadcast the position signal based on the detected presence or absence of a human within a vicinity of the location beacon.

Advantageously, the wireless radio technology chip is configured to broadcast the position signal using a Bluetooth Low Energy (BLE) message.

According to a further aspect, a system is provided, comprising:
a plurality of location beacons, each positioned at a respective location of an indoor environment and configured to broadcast a respective position signal; and
a mobile device configured to determine a position estimate based on a received broadcast position signal,
wherein the respective locations of the plurality of location beacons are determined based on at least one of a floor plan of the indoor environment, a desired coverage of the system, and available ambient light within the indoor environment.

Advantageously, at least one of the plurality of location beacons is configured to broadcast its respective position signal periodically based on a charge level of a power source.

Advantageously, at least one of the plurality of location beacons is configured to broadcast its respective position signal using a Bluetooth Low Energy (BLE) message.

Advantageously, at least one of the plurality of location beacons is pre-configured with positions coordinates associated with its respective location.

Advantageously, at least one of the plurality of location beacons is configured to:
detect whether a human is within a vicinity of the at least one location beacon; and
adjust, responsive to the detecting, a broadcast rate of its respective position signal.

Advantageously, the at least one of the plurality of location beacons is further configured to stop broadcasting its respective position signal if no human is detected within the vicinity of the at least one location beacon.

Advantageously, at least one of the plurality of location beacons is configured to: detect whether a mobile device is within a vicinity of the at least one location beacon; and adjust, responsive to the detecting, a broadcast rate of its respective position signal.

Advantageously, a number of the plurality of location beacons is determined based on at least one of the floor plan of the indoor environment, an effective broadcast range of the location beacons, and the available ambient light within the indoor environment.

Advantageously, at least one of the plurality of location beacons is configured to broadcast its respective position signal according to an effective broadcast range, the effective broadcast range selected based on at least one of a history of learned mobile device positions and previously used broadcast ranges.

Advantageously, at least one of the plurality of location beacons comprises:
a memory configured to store position information corresponding to the respective location of the location beacon;
a controller, coupled to the memory;
a wireless radio technology chip, coupled to the controller, configured to broadcast the respective position signal of the location beacon;
a rechargeable power source; and
one or more solar cells configured to re-charge the rechargeable power source.

### BRIEF DESCRIPTION OF THE DRAWINGS

The accompanying drawings, which are incorporated herein and form a part of the specification, illustrate the present disclosure and, together with the description, further serve to explain the principles of the disclosure and to enable a person skilled in the pertinent art to make and use the disclosure.

FIG. 1 is an example that illustrates an indoor positioning system according to an embodiment of the present disclosure.

FIG. 2 is a block diagram of an example location beacon according to an embodiment of the present disclosure.

FIG. 3A is a view of the top side of an example location beacon according to an embodiment of the present disclosure.

FIG. 3B is a view of the bottom side of an example location beacon according to an embodiment of the present disclosure.

FIG. 3C is a view of the interior of an example location beacon according to an embodiment of the present disclosure.

FIG. 4 shows an example location beacon mounted in an indoor environment according to an embodiment of the present disclosure.

FIG. 5 is a flowchart of an exemplary process for designing a location beacon system according to an embodiment of the present disclosure.

FIG. 6 is a flowchart of an exemplary process performed by a location beacon according to an embodiment of the present disclosure.

The present disclosure will be described with reference to the accompanying drawings. Generally, the drawing in which an element first appears is indicated by the leftmost digit(s) in the corresponding reference number.

### DETAILED DESCRIPTION OF EMBODIMENTS

Existing positioning solutions include sensor-based solutions and signaling-based solutions (e.g., Global Navigation Satellite System (GNSS) solutions, cellular-based solutions, and Wireless Local Area Network (WLAN)-based solutions). Signaling-based solutions rely on the mobile device receiving one or more signals from one or more external entities or devices, and using the one or more signals to estimate its position. Sensor-based solutions rely on a known initial position (obtained via a signaling-based solution, for example) and on data provided by one or more sensors associated with the mobile device (e.g., accelerometer, gyroscope, etc.) to estimate the mobile device's current position based on propagation from the known initial position.

Signaling-based solutions can rely on communication technologies designed for communication ranges that exceed typical indoor ranges (e.g., GNSS receivers are designed for reception over thousands of miles, communication ranges in a cellular network are on the order of miles, and WLAN ranges are typically in the hundreds of feet). As a result, signaling-based solutions can have high power requirements, particularly with respect to a mobile device, such as a cellular handset. This is especially true when an "always-on" solution is desired, which requires the mobile device to be in continuous or substantially continuous communication with the signaling infrastructure to enable position determination.

In addition to large power requirements, positioning accuracy may vary based on the location of the mobile device, e.g., indoors or outside. For example, the accuracy of GNSS and cellular-based solutions can degrade indoors due to factors such as signal attenuation and multipath effects. Sensor-based solutions become inaccurate indoors after a period of time, unless continuously assisted with a known position by another technology.

WLAN-based solutions are the most commonly used indoor positioning solutions due to their accuracy. However, for several reasons, WLAN-based solutions are not well suited to become a ubiquitous indoor positioning solution. Indeed, in addition to consuming a substantial amount of power, WLAN-based solutions can be expensive and can require a large amount of infrastructure. For example, a typical WLAN-based solution requires at least three WLAN access points to provide adequate accuracy. Each WLAN access point requires a continuous external power source (e.g., provided by a power adaptor), configuration, and an Internet connection for proper operation.

Embodiments of the present disclosure, as further described below, can provide an "always-on," accurate, low-power, and low-cost solution for indoor positioning. The indoor positioning solution of the present disclosure is enabled by one or more low-power, low-cost location beacons, which can be easily configured and installed in any indoor or outdoor environment to support position determination. In some embodiments, the location beacons use a low power, low data rate wireless radio technology (e.g., Bluetooth Low Energy (BLE)), which is well suited for typical indoor ranges and data rates associated with positioning. In addition, the location beacons may be rechargeable via ambient light (e.g., through one or more solar cells) and thus can be independent of an external power source. As a result, embodiments can have very low power requirements, both with respect to the mobile device and with respect to the location beacon, thereby allowing the indoor positioning solution to be maintained in an "always-on" mode. In addition, the location beacons benefit from a very cost efficient design, which allows for ubiquitous utilization of the enabled indoor positioning solution in a variety of indoor (and sometimes outdoor) locations, both public and private, and regardless of size.

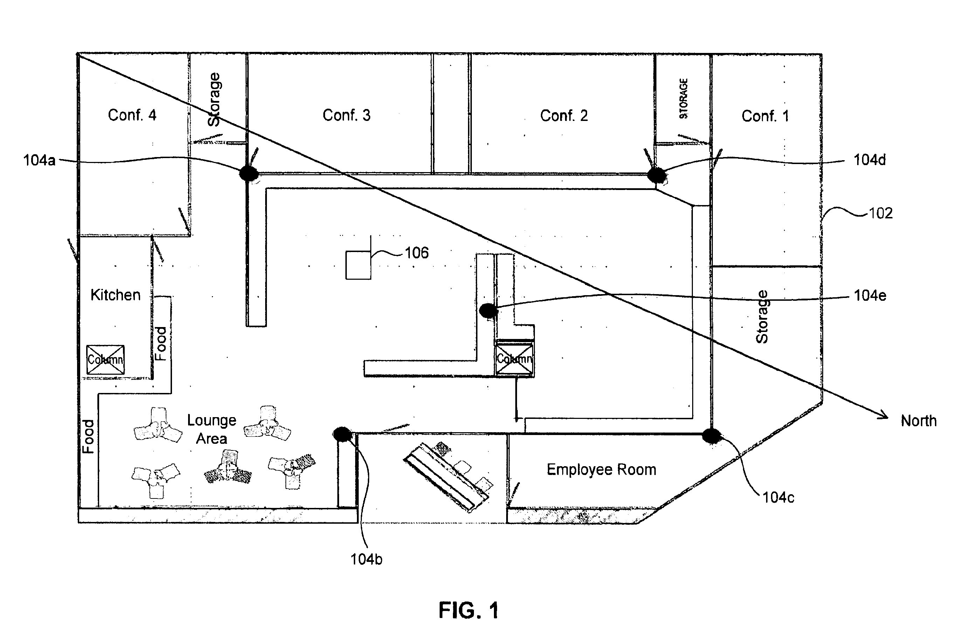

FIG. 1 is an example that illustrates an indoor positioning system according to an embodiment of the present disclosure. As shown in FIG. 1, the indoor positioning system is installed in a structure 102, and includes location beacons 104a, 104b, 104c, 104d, and 104e positioned at respective locations (e.g., on walls, windows, etc.) within structure 102. In an embodiment, the beacon locations are pre-determined (e.g., using a software tool) to ensure adequate coverage throughout structure 102. The number of location beacons to be included in a particular structure can be determined based on a variety of factors, including the arrangement of walls and portals, and the materials used to construct the structure.

Location beacons 104a-e support indoor positioning for mobile devices, such as a cellular handset 106, for example, within structure 102. Indoor positioning support can be provided for any device capable of receiving transmitted position information. For the purpose of illustration only, structure 102 is shown as an office in FIG. 1, but may be any indoor/outdoor structure or setting in which position determination may be useful, including, for example, airports, shopping malls, convention centers, residential homes, hospitals, office parks, school campuses, etc.

A location beacon, e.g., location beacons 104a-e, can be configured with position information, such as position coordinates (e.g., longitude, latitude) associated with its respective location within structure 102. The location beacon can be pre-configured with position coordinates, e.g., by a supplier, or can be configured during or after installation at its respective location. Further, each of location beacons 104a-e is configured to broadcast (constantly, periodically, or on demand) position information, e.g., one or more of its position coordinates.

Location beacons 104a-e can use a low power, low data rate wireless radio technology to broadcast their position information. The wireless radio technology used can be selected such that it imposes very low power requirements on both location beacons 104a-e and the supported mobile devices (e.g., cellular handset 106). Further, the wireless radio technology can be selected such that it provides communication ranges comparable to typical indoor ranges. In an indoor environment, a mobile device is very likely to be no more than 50 meters from a permanent fixture (e.g., wall, ceiling, window, etc.) at all times. Thus, a wireless radio technology, according to embodiments, may provide a communication range of approximately 50 meters. An example technology having a corresponding range is Bluetooth Low Energy (BLE) defined in Bluetooth v4.0.

In other embodiments, any one of location beacons 104a-e may be configured to have an effective broadcast range, which may be different than the range(s) enabled by the wireless radio technology used by the beacon. In some embodiments, the location beacon can configure its effective broadcast range based on a history of learned mobile device positions and/or previously used broadcast ranges. For example, the location beacon may select its effective broadcast range such that it can cover a large portion (e.g., 90%) of learned positions and/or previously used broadcast ranges. In other embodiments, the location beacon may be configured with a fixed effective broadcast range by walking, using a mobile device, through the areas of interest of structure 102 to determine the required broadcast range to support service in the areas of interest.

In some implementations, location beacons 104a-e broadcast their respective positions but do not provide two-way data communication, so the wireless radio technology can be selected such that it can be operated at a low data rate (e.g., 200 to 1000 kbit/sec). This, in turn, reduces the power consumption of both location beacons 104a-e and the supported mobile devices. In some implementations, as a result of the reduced power consumption, the provided indoor positioning solution also can be operated in an "always on" mode. This is in contrast to other positioning solutions, e.g. WLAN-based positioning solutions, which, when operated in an always on mode, cause a mobile device's battery to be quickly drained.

In operation, cellular handset 106 may use any number of location beacons 104a-e to estimate its position within structure 102. For example, cellular handset 106 may receive signals from location beacons 104a, 104b, and 104e. Each of the received location beacon signals can contain the position of the corresponding broadcasting location beacon. In addition to reading the contents of each of the received signals, cellular handset 106 can measure respective signal strengths from the received location beacon signals. Cellular handset 106 can then use the respective signal strengths to estimate its distance from each of location beacons 104a, 104b, and 104e. From the estimated distances and the location beacon positions provided by the received signals, cellular handset 106 can estimate its position within structure 102. In some embodiments, cellular handset 106 can perform a multi-lateration process (when two or more signals are received) to estimate its position based on the estimated distances from the broadcasting location beacons and the reported location beacon positions.

In some other embodiments, cellular handset 106, after measuring the respective signal strengths from the received location beacon signals, can compare the received signals and their associated signal strengths (referred to hereinafter as a "measured radio frequency (RF) fingerprint") against an existing RF fingerprint database to estimate its position. The RF fingerprint database can include observed location beacon signals (and/or identifiers thereof) and associated signal strengths ("observed RF fingerprints") at predetermined locations within structure 102.

In some embodiments, the RF fingerprint database is generated using a mobile device application operable (e.g., by walking within structure 102) to generate and record the RF fingerprints associated with a number of locations within structure 102. The locations for which an RF fingerprint is recorded in the RF fingerprint database can be determined at any time before, during, and after the RF fingerprint information is collected. The positions of the respective locations for which an RF fingerprint is recorded may be obtained using another positioning system available on the mobile device or may be determined through other means (e.g., manually). The RF fingerprint database may be available locally on the mobile device and/or may be downloadable from a server on demand. For example, the cellular handset 106 may contact a server with its latest known position and download an appropriate RF fingerprint database from the server.

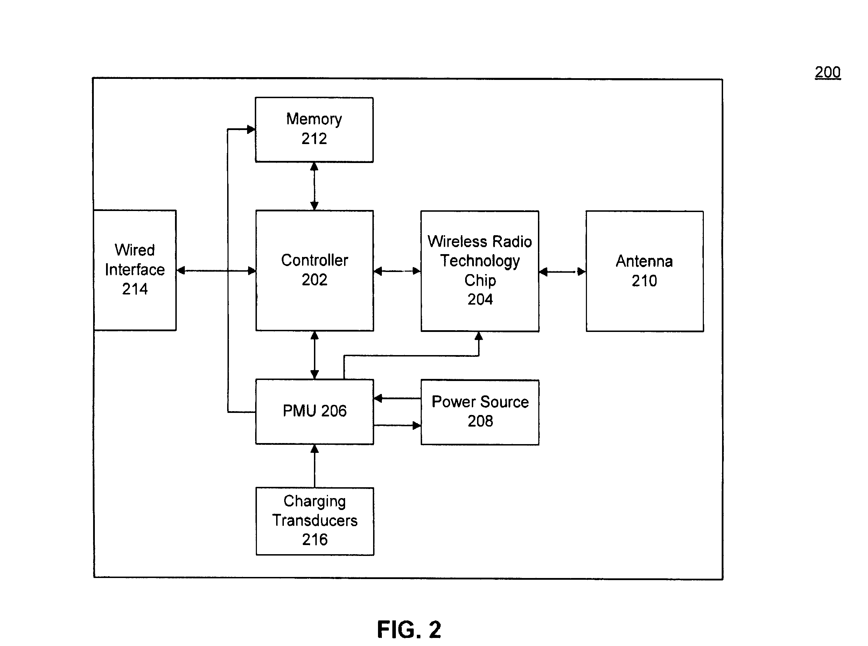

FIG. 2 is a block diagram of an example location beacon 200 according to an embodiment of the present disclosure. Location beacon 200 is provided for the purpose of illustration only and is not limiting of embodiments of the present disclosure.

As shown in FIG. 2, location beacon 200 includes a controller 202, a wireless radio technology chip 204, a power management unit (PMU) 206, a power source 208, an antenna 210, a memory 212, a wired interface 214, and charging transducers 216. In some embodiments, some or all of the components of location beacon 200 are implemented on the same printed circuit board (PCB). As would be understood by a person of skill in the art based on the teachings herein, in other embodiments, example location beacon 200 can include more, fewer, or different components than shown in FIG. 2. For instance, in some embodiments, wired interface 214 can be omitted.

Controller 202 is a general-level controller of location beacon 200. Controller 202 can perform general functions, including boot up, configuration, and management functions. As shown in FIG. 2, controller 202 may communicate with one or more of wireless radio technology chip 204, PMU 206, and memory 212 to perform these functions.

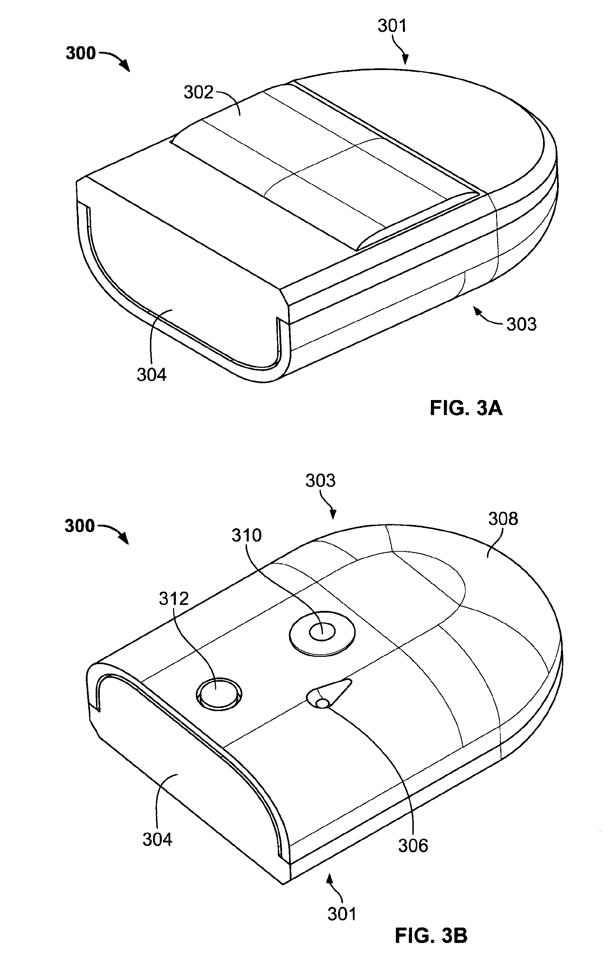

In some embodiments, controller 202 can be communicatively coupled to a user input interface (shown below in FIG. 3B) designed to turn on/off location beacon 200. In response to user input, controller 202 may initiate a boot up/down sequence and communicate with PMU 206 to control power operations within location beacon 200 in accordance with the user input.

In some other embodiments, controller 202 is configured to communicate with wireless radio technology chip 204 and memory 212 in order to configure location beacon 200 with a position. Specifically, controller 202 may be configured to receive a message, containing the location beacon's position, from wireless radio technology chip 204. The message may be received by location beacon 200 from a configuring device (e.g., laptop computer, mobile phone, etc.), either wirelessly via antenna 210 or through wired interface 214. Wired interface 214 can be any interface (e.g., Universal Serial Bus (USB)) that can be used to physically connect location beacon 200 to the configuring device.

Controller 202 may be configured to process the received message and store the position contained therein in memory 212. Memory 212 can be any volatile or non-volatile memory. For instance, in some embodiments, memory 212 is a non-volatile random access memory (NVRAM), which allows for stored contents to be retained when location beacon 200 is turned off.

Wireless radio technology chip 204 is a single-chip wireless radio technology processor with an integrated RF transceiver. In other embodiments, chip 204 includes only an RF transmitter. In some embodiments, wireless radio technology chip 204 is configured to implement a Bluetooth v4.0 protocol stack, including BLE. As would be understood by a person of skill in the art based on the teachings herein, in other embodiments, wireless radio technology chip 204 may be replaced with a chip that implements one or more other wireless radio technologies, including low-power and ultra-low power (ULP) technologies, such as ANT, Zigbee, and WirelessHART, for example.

Wireless radio technology chip 204 is configured to broadcast a position signal containing the position of location beacon 200 (position signal) using antenna 210. Antenna 210 may be any antenna, including an omnidirectional antenna or antenna array, configured according to the desired broadcast range of location beacon 200.

In some embodiments, controller 202 is configured to retrieve the location beacon position from memory 212 and to provide it to wireless radio technology chip 204. Wireless radio technology chip 204 is configured to generate a message (which complies with a wireless radio technology implemented by chip 204) containing the retrieved location beacon position and to broadcast the message in accordance with an implemented wireless radio technology using antenna 210. In some other embodiments, wireless radio technology chip 204 can be configured to retrieve the position from memory 212 directly, without involving controller 202.

The position signal may be broadcast periodically or as directed by controller 202 and/or PMU 206. In some embodiments, the interval at which the position signal is broadcast can be based on the charge level of power source 208. For instance, in response to an indication from PMU 206 that the charge level of power source 208 has fallen below a defined threshold, wireless radio technology chip 204 can reduce the position signal broadcast rate to save power. Conversely, wireless radio technology chip 204 can increase the position signal broadcast rate when the charge level of power source 208 has reached a defined threshold, e.g., once it has recharged to a predetermined level, or when power source 208 is recharging at a predetermined rate.

Alternatively or additionally, the position signal can be broadcast based on the detected presence/absence of a human or a mobile device in the vicinity of location beacon 200 (e.g., the position signal may be broadcast at a higher rate when human presence is detected, the position signal may be broadcast only when a human or mobile device is detected, the location beacon may stop broadcasting if a human or mobile device is not detected over a defined time interval, etc.). For instance, location beacon 200 can include one or more sensors to detect the presence of a mobile device or a person, such as optical, touch, motion, and audio sensors.

Alternatively or additionally, the position signal can be broadcast based on current measured ambient light. In some embodiments, charging transducers 216 include solar cells that can be used to measure ambient light levels. The position signal broadcast rate can be adjusted based on comparing the measured ambient light to one or more thresholds or ranges. Additionally, the broadcast rate may also account for the charge level of power source 208 such that the location beacon can be maintained powered-on for as long as possible given current ambient light level and the charge level of power source 208.

PMU 206 can include a microcontroller configured to control power functions in location beacon 200. Among other functions, PMU 206 may control and monitor the charging of power source 208 and control the power provided to each of controller 202, wireless radio technology chip 204, and memory 212. For example, as mentioned above, PMU 206 may power on/off controller 202, wireless radio technology chip 204, and memory 212 in response to user input turning on/off location beacon 200.

Power source 208 includes a rechargeable power source, such as a super-capacitor, a Lithium-ion battery, an ultra-battery, or an ultra-capacitor, for example. In some embodiments, power source 208 is recharged via one or more charging transducers 216 (e.g., solar cells) of location beacon 200, and thus requires no external power source for charging. In some embodiments, PMU 206 is configured to perform smart-charging/discharging of power source 208 based on or more of the state/characteristics of the solar cells, the current charge level of power source 208, characteristics of power source 208, temperature, etc. In other embodiments, charging transducers 216 include an induction coil, which can be used to wirelessly charge power source 208.

An example implementation of a location beacon 300 according to an embodiment of the present disclosure is provided in FIGs. 3A-C. The example implementation of location beacon 300 is provided for the purpose of illustration only and is not limiting. As shown in FIGs. 3A and 3B, location beacon 300 includes a 2-piece plastic housing with a top side 301, a bottom side 303, and a mounting surface 304. In an example embodiment, the location beacon 300 is approximately 2 inches wide, 2.5 inches long, and 0.75 inches thick. However, the location beacon 300 can also be implemented in smaller or larger form factors, and the ratios of its dimensions can be changed.

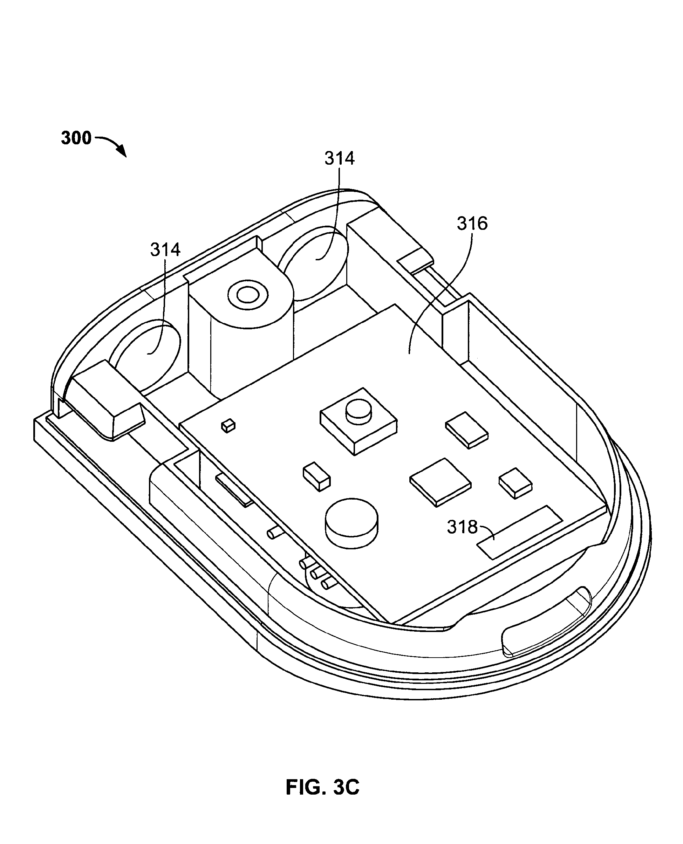

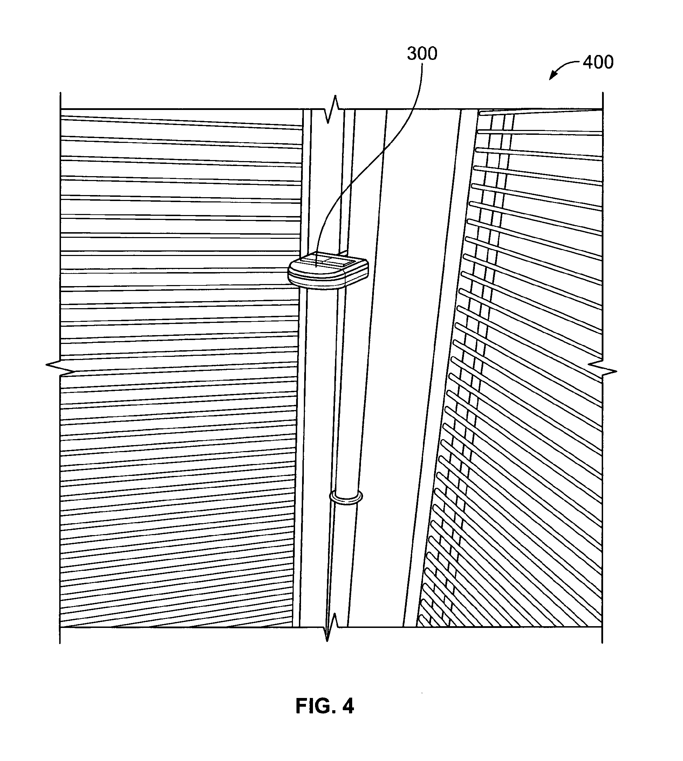

Mounting surface 304 allows the beacon to be mounted in any desired direction/orientation and against a variety of surface types. In an embodiment, as shown in FIG. 3C, the location beacon includes interior magnets 314 (e.g., Neodymium magnets), which allow the location beacon to be easily mounted against ferrous surfaces (and easily removed when necessary). An example magnetic mounting of a location beacon is shown in FIG. 4. The location beacon 300 may, alternatively, be attached against a surface of any type using a dual lock reclosable fastener system (commonly known as Velcro) with adhesive backings. Other known removable or permanent attachment mechanisms could also be used, including metal hardware, double-sided tape, etc.

As shown in FIG. 3A, the location beacon 300 includes solar (e.g., photovoltaic) cells 302 on the top side 301 of the location beacon. Solar cells 302 may include polycrystalline, monocrystalline, thin film, and/or amorphous solar cells. Solar cells 302 may be used to re-charge a rechargeable power source of the location beacon 300. To take advantage of this feature, the location beacon 300 may be mounted with the top side 301 directly or indirectly exposed to a light source, such as a ceiling light or window, as shown in FIG. 4, for example. In some embodiments, solar cells 302 are configured to re-charge the power source of the location beacon 300 at such a rate and/or output power that the location beacon can be maintained in a powered-up state under pre-determined ambient lighting conditions. Accordingly, solar cells 302 may adjust the output power and/or rate of charging of the power source based on one or more of the current charge level of the beacon power source and the beacon broadcast rate of the location beacon.

On the bottom side 303, as shown in FIG. 3B, the location beacon 300 can include a recessed light emitting diode (LED) 306, a reset button 310, and a screw 312 for assembly. LED 306 can be used as a status indicator. In some embodiments, LED 306 is configured to emit a blue light pulse when the beacon is operational, and to emit a solid red light to indicate an error message (e.g., low battery, reset needed, device has been moved, etc.). Other colors and patterns also can be used, and any meaning can be associated with a particular color/pattern combination. LED 306 may further include a light pipe feature, which allows the light to be routed inside the location beacon 300 without interfering with other components (e.g., antenna) of the beacon.

Reset button 310 provides a user interface to turn on/off the location beacon 300. In some embodiments, the location beacon 300 can be turned on/off by pressing and holding reset button 310 for a short time. In some embodiments, reset button 310 is coupled to a PMU (e.g., PMU 206) of the location beacon 300, which controls the power within the location beacon 300 in accordance with input from reset button 310.

In some embodiments, e.g., as shown in FIG. 3B, the location beacon 300 is designed to have a "nose" shaped antenna end 308. Antenna end 308 is configured to enhance the signal pattern of an antenna 318 of the location beacon 300, which sits inside the location beacon 300 and faces antenna end 308. In some embodiments, e.g., as shown in FIG. 3C, antenna 308 is connected to a printed circuit board (PCB) 316, which may include one or more other components (e.g., controller 202, wireless radio technology chip 204, PMU 206, power source 208, and memory 212) of the location beacon 300.

As described above, embodiments of the present disclosure may be used in a variety of indoor (and outdoor) locations, public or private, small or large, to enable an accurate, low power, low cost, and "always-on" indoor positioning system. Location beacon systems according to embodiments may be readily configured, mounted, and put in operation in short periods of time. As would be understood by a person of skill in the art based on the teachings herein, location beacon systems may be designed, configured, and installed in a variety of ways.

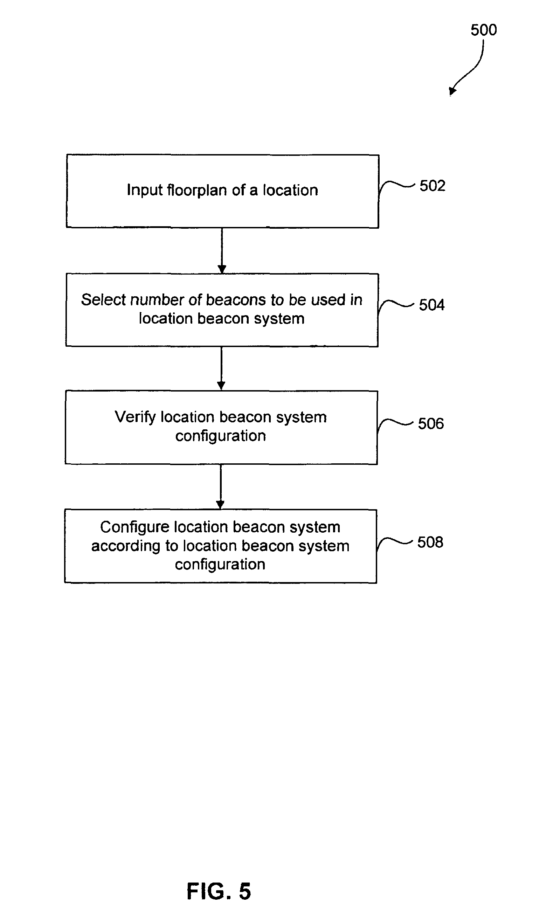

FIG. 5 is a flowchart of an example process 500 for designing a location beacon system according to an embodiment of the present disclosure. Process 500 may be performed using, e.g., a software utility or a web-based configuration tool.

As shown in FIG. 5, process 500 begins in step 502, which includes inputting a floor plan of a location for which a location beacon system is to be designed. The location can include one or more indoor and/or outdoor areas. In some embodiments, the floor plan of the location may be available from a web-based service, such as a mapping service, for example. The floor plan may include position coordinates (e.g., longitude, latitude) of various points or structures (e.g., walls, windows, etc.) associated with the location.

Subsequently, in step 504, process 500 includes selecting a number of location beacons to be used in the location beacon system. In some embodiments, step 504 includes manually selecting the number of location beacons to be used. Alternatively or additionally, the software utility may suggest a number of location beacons based on one or more factors, such as the location floor plan (e.g., size, shape, etc.), the capabilities of the location beacons (e.g., effective broadcast range), and the availability of light sources. The user may accept or change the suggested number of location beacons as desired. The software utility may also suggest a location beacon type based on the location floor plan and/or other attributes of the location (available light, mounting options, etc.).

Subsequently, the software utility generates a proposed location beacon system configuration with the selected number of location beacons. The proposed configuration includes proposed mounting locations (and associated position coordinates) within the location for each location beacon of the location beacon system. In some embodiments, the proposed configuration is displayed on top of the floor plan of the location. The proposed configuration may be generated based on one or more of the location floor plan, desired coverage, available ambient light, etc. The user may verify the proposed location beacon system configuration in step 506, and change it if desired.

Finally, in step 508, the location beacon system may be configured according to the location beacon system configuration. In some embodiments, step 508 includes configuring each location beacon of the system with a respective position (e.g., longitude, latitude) provided by the configuration. This can be performed prior to shipping the location beacons for installation, e.g., by a manufacturer or retailer. The location beacon system can then be installed by mounting each location beacon in its assigned location. Alternatively, a location beacon can be configured after it has been installed, e.g., as part of installing the location beacon system or if the location beacon is relocated.

In some other embodiments, the software utility may provide means to order (e.g., online) the location beacon system after verification in step 506. The user may select that the location beacon system be pre-configured with the location beacon configuration. The location beacon system is then shipped to the user with instructions indicating the mounting location of each location beacon of the system.

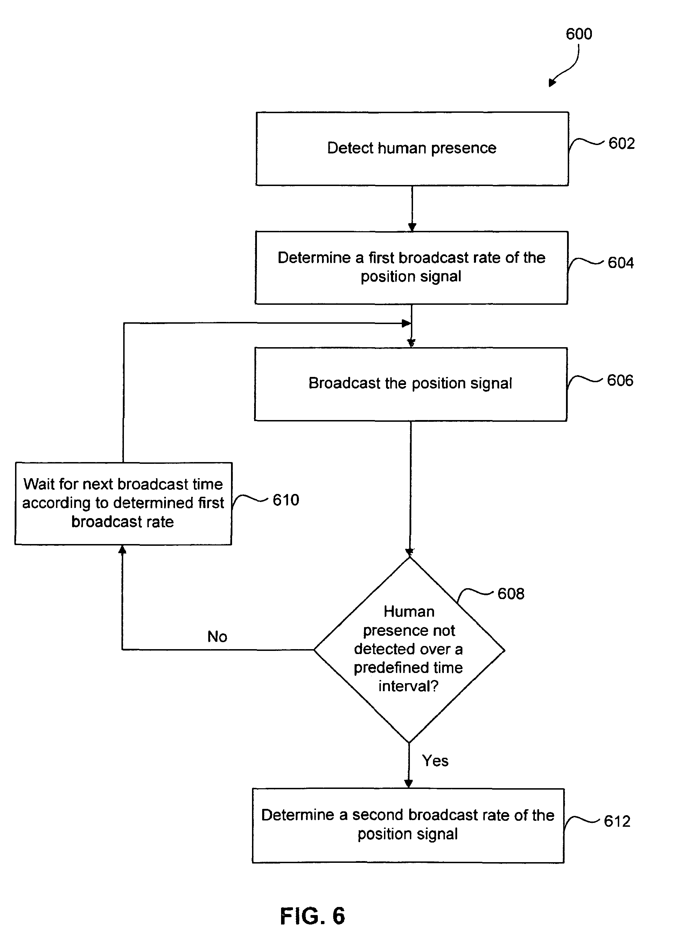

FIG. 6 is a flowchart of an example process 600 performed by a location beacon according to an embodiment of the present disclosure. As shown in FIG. 6, process 600 begins with the location beacon detecting human presence in step 602. Upon detecting human presence, process 600 proceeds to step 604, which includes the location beacon determining a first broadcast rate for its position signal. As described above, the first broadcast rate can be based on the charge level and/or the charging rate of a power source of the location beacon. Subsequently, in step 606, the location beacon broadcasts the position signal, and then proceeds to step 608, in which the location beacon checks if human presence has not been detected over a predefined time interval. If the answer to the condition of step 608 is no, process 600 proceeds to step 610, in which the location beacon waits for the next broadcast time according to the determined first broadcast rate, and then returns to step 606. Otherwise, if the answer to the condition of step 608 is yes, then process 600 proceeds to step 612, which includes determining a second broadcast rate for the position signal. In some embodiments, the second broadcast rate is lower than the first broadcast signal. In other embodiments, step 612 may include the location beacon stopping the broadcast of the position signal until a human presence is detected again.

Embodiments have been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

The foregoing description of the specific embodiments will so fully reveal the general nature of the disclosure that others can, by applying knowledge within the skill of the art, readily modify and/or adapt for various applications such specific embodiments, without undue experimentation, without departing from the general concept of the present disclosure. Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

The breadth and scope of embodiments of the present disclosure should not be limited by any of the above-described exemplary embodiments, but should be defined only in accordance with the following claims and their equivalents.

## Claims

1. A location beacon, comprising:
a memory configured to store position information corresponding to a location of the location beacon;
a controller, coupled to the memory;
a wireless radio technology chip, coupled to the controller, configured to broadcast a position signal representing the position information of the location beacon;
a rechargeable power source; and
one or more solar cells configured to re-charge the rechargeable power source.

2. The location beacon of claim 1, wherein the controller is configured to receive the position information from the wireless radio technology chip and to store the position information in the memory.

3. The location beacon of claim 1 or 2, wherein the position information comprises position coordinates of the location of the location beacon.

4. The location beacon of any of claims 1 to 3, further comprising:
a power management unit (PMU) configured to control power functions in the location beacon.

5. The location beacon of any of claims 1 to 4, wherein the wireless radio technology chip is configured to broadcast the position signal according to an effective broadcast range, the effective broadcast range selected based on at least one of a history of learned mobile device positions and previously used broadcast ranges.

6. The location beacon of any of claims 1 to 5, wherein the wireless radio technology chip is configured to broadcast the position signal at a periodical rate.

7. The location beacon of claim 6, wherein the periodical rate is based on a charge level of a power source of the location beacon.

8. The location beacon of any of claims 1 to 7, wherein the wireless radio technology chip is configured to broadcast the position signal in response to the presence of a mobile device within a predetermined vicinity of the location beacon.

9. The location beacon of any of claims 1 to 8, wherein the wireless radio technology chip is configured to broadcast the position signal based on the detected presence or absence of a human within a vicinity of the location beacon.

10. The location beacon of any of claims 1 to 9, wherein the wireless radio technology chip is configured to broadcast the position signal using a Bluetooth Low Energy (BLE) message.

11. A system, comprising:
a plurality of location beacons, each positioned at a respective location of an indoor environment and configured to broadcast a respective position signal; and
a mobile device configured to determine a position estimate based on a received broadcast position signal,
wherein the respective locations of the plurality of location beacons are determined based on at least one of a floor plan of the indoor environment, a desired coverage of the system, and available ambient light within the indoor environment.

12. The system of claim 11, wherein at least one of the plurality of location beacons is configured to broadcast its respective position signal periodically based on a charge level of a power source.

13. The system of claim 11 or 12, wherein at least one of the plurality of location beacons is configured to broadcast its respective position signal using a Bluetooth Low Energy (BLE) message.

14. The system of any of claims 11 to 13, wherein at least one of the plurality of location beacons is pre-configured with positions coordinates associated with its respective location.

15. The system of any of claims 11 to 14, wherein at least one of the plurality of location beacons is configured to:
detect whether a human is within a vicinity of the at least one location beacon; and
adjust, responsive to the detecting, a broadcast rate of its respective position signal.
